# EUROPÄISCHE PATENTSCHRIFT

(11) **EP 1 142 846 B1**
(45) Veröffentlichungstag und Bekanntmachung des Hinweises auf die Patenterteilung: **15.05.2002**
(21) Anmeldenummer: 00106219.9
(22) Anmeldetag: 22.03.2000
(51) Int. Cl.: C04B 24/26, B32B 13/12, H01L 31/048

(54) **Verfahren zum Befestigen einer Solarzelle an einem Untergrund**
Method for securing of a solar cell on a support
Procedé pour la fixation d'une cellule solaire sur un support

(43) Veröffentlichungstag der Anmeldung: 10.10.2001
(73) Patentinhaber: Böe, Hans Peter, 46049 Oberhausen (DE)
(72) Erfinder: Böe, Hans Peter, 46049 Oberhausen (DE)
(74) Vertreter: Masch, Karl Gerhard, Dr.

(56) Entgegenhaltungen:
- DE-U- 20 002 603
- DE-U- 29 622 732
- US-A- 3 419 461
- DATABASE WPI Week 197439 Derwent Publications Ltd., London, GB; AN 1974-68504V XP002144694 & JP 49 017428 A (ONODA CEMENT CO)
- PATENT ABSTRACTS OF JAPAN vol. 014, no. 188 (C-0710), 17. April 1990 (1990-04-17) & JP 02 034588 A (DAINIPPON INK & CHEM INC)

## Beschreibung

Die Erfindung betrifft ein Verfahren zum Befestigen einer Solarzelle mit vorderer Glasscheibe und hinterer Polyvinylfluoridfolie an einem Untergrund.

Da im Stand der Technik bisher keine Verbundmittel bzw. Kleber bekannt geworden sind, mit deren Hilfe Polyvinylfluoridfolien mit beliebigen Untergründen, insbesondere Bauwerksuntergründen, dauerhaft befestigt werden können, hat man im Rahmen der aus der Praxis bekannten Maßnahmen die Solarzelle in einem Metallrahmen gefasst und über diesen mit dem Untergrund verbunden. Das ist in erheblichem Maße aufwendig.

Bekannt ist es zwar auch (EP 0 790 370 A), Solarzellen mit vorderer Glasscheibe mit Hilfe einer Verbundmörtelschicht, deren Verbundmörtel aus einem feinteiligen neutralen Zuschlagstoff sowie Zement besteht und mit einer wässrigen Dispersion eines Polyacrylsäurederivates angemacht ist, wobei das Polyacrylsäurederivat ein logarithmisches Dekrement der Torsionsschwingungsdämpfung - bestimmt nach DIN 53445 - aufweist, welches bei Temperaturen unter 0 °C ein Maximum besitzt, mit einem beliebigen Untergrund in Verbund zu bringen. Die Solarzelle ist hier jedoch auch hinten mit einer Glasscheibe versehen. Die Befestigung von Solarzellen mit hinterer Polyvinylfluoridfolie ist hierdurch bisher nicht beeinflusst worden.

Der Erfindung liegt die Aufgabe zugrunde, ein Verfahren der eingangs genannten Art anzugeben, mit dem Solarzellen mit vorderer Glasscheibe und hinterer Polyvinylfluoridfolie dauerhaft mit dem Untergrund verbunden werden können.

Die erfindungsgemäße Lösung dieser Aufgabe ergibt sich aus Patentanspruch 1.

Die Erfindung geht hierbei von der Tatsache aus, dass auch Polyvinylfluorid ebenso wie Glas mit Hilfe des genannten Verbundmörtels so dauerhaft verbunden werden kann und nach Erhärten der Verbundmörtelschicht verbunden ist, dass der Verbund praktisch allen gewünschten Anforderungen genügt. Das war nicht zu erwarten, da Polyvinylfluorid zwar ebenso wie Glas wasserdampfundurchlässig ist, chemisch aber eine ganz andere Konstitution als Glas aufweist.

Für die weitere Ausgestaltung bestehen im Rahmen der Erfindung mehrere Möglichkeiten. So empfiehlt sich eine bevorzugte Ausführungsform, bei der die Solarzelle auf ihrer Rückseite mit einer weiteren, mit Mangel an Hydrationswasser erhärteten Schicht des Verbundmörtels vorbeschichtet und später mit Hilfe der frischen Verbundmörtelschicht mit dem Untergrund in Verbund gebracht wird. Handelt es sich bei dem Untergrund um einen Bauwerksuntergrund aus Beton, so empfiehlt es sich, mit einer Kassettenausnehmung für die Solarzelle zu arbeiten, so dass letzte gleichsam von unten gestützt wird. Solarzellen aus amorphem Silizium zeigen einen umso größeren Wirkungsgrad, je höher deren Temperatur ist. Hier wird die Solarzelle nach einer bevorzugten Ausführungsform mit Schaumglas als Untergrund in Verbund gebracht. Bei Solarzellen aus kristallinem Silizium, bei der der Wirkungsgrad umso größer ist, je tiefer die Temperatur der Solarzelle ist, sollte die Solarzelle mit einer nach hinten ausgebogene Aufhängezungen aufweisenden Blechplatte als Untergrund in Verbund gebracht werden und mit Hilfe der Aufhängezungen an einer Bauwerkswandung aufzuhängen, um so gleichsam eine kühlende Hinterlüftung zu ermöglichen. Dabei sollte die Solarzelle mit einer Blechplatte in Verbund gebracht werden, die mit einer unteren Randabwicklung zum Unterfassen der Solarzelle versehen ist.

Der Verbundmörtel weist insbesondere einen feinteiligen neutralen Zuschlagstoff der Körnung 0,1 bis 1mm, vorzugsweise 0,2 bis 0,7 mm, auf. Als Zement empfiehlt sich Portlandzement. Das Polyacrylsäurederivat sollte ein Polyacrylat, insbesondere ein Acrylharz, oder ein Copolymer mit Acrylnitril als Comonomer sein. Der Wassergehalt der Dispersion des Polyacrylsäurederivates richtet sich wie schon gesagt danach, ob der Verbundmörtel für die rückseitige Beschichtung der Solarzelle oder als diese Teile verbindender Kleber eingesetzt wird.

Im Folgenden wird die Erfindung anhand einer Ausführungsbeispiel darstellenden Zeichnung näher erläutert. Es zeigen
- Fig. 1: eine mit einem Untergrund verbundene Solarzelle in einer ersten Ausführungsform und
- Fig. 2: eine mit einem Untergrund verbundene Solarzelle in einer anderen Ausführungsform.

Die in den Figuren dargestellten Solarzellen bestehen aus einer Photovoltaikschicht 1, die auf der Vorderseite mit einer Glasscheibe 2 und auf der Rückseite mit einer Polyvinylfluoridfolie 3 abgedeckt ist. Auf der Rückseite sind die Solarzellen zunächst mit einer Verbundmörtelschicht 4 vorbeschichtet worden, deren Verbundmörtel aus einem feinteiligen neutralen Zuschlagstoff sowie Zement besteht und mit einer wässrigen Dispersion eines Polyacrylsäurederivates angemacht ist, wobei das Polyacrylsäurederivat ein logarithmisches Dekrement der Torsionsschwingungsdämpfung - bestimmt nach DIN 53445 - aufweist, welches bei Temperaturen unter 0 °C ein Maximum besitzt. Diese Verbundmörtelvorbeschichtung ist mit Mangel an Hydrationswasser erhärtet. Die so vorbeschichtet Solarzelle ist dann mit Hilfe einer weiteren Verbundmörtelschicht 5 aus dem Verbundmörtel mit dem Untergrund in Verbund gebracht worden, indem man den frischen Verbundmörtel hat aushärten lassen.

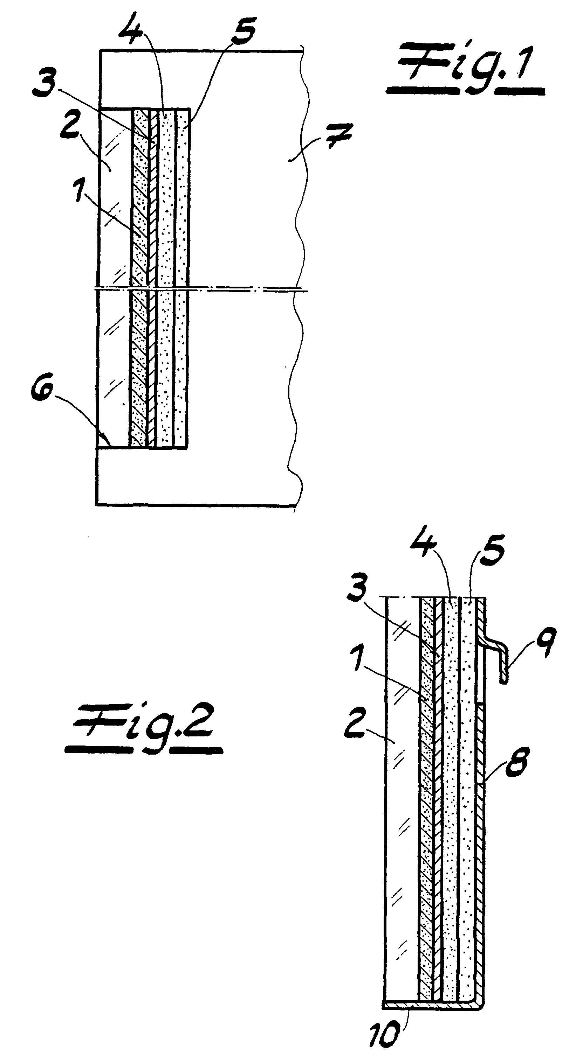

Bei der Ausführungsform nach Fig. 1 ist die Solarzelle in eine Kassettenausnehmung 6 eines Bauwerksuntergrundes 7 aus Beton eingesetzt und mit dem Bauwerksuntergrund in Verbund gebracht worden. Es besteht aber auch die nicht dargestellte Möglichkeit, Schaumglas als Untergrund einzusetzen.

Bei der Ausführungsform nach Fig. 2 ist die Solarzelle mit einer Blechplatte 8 als Untergrund in Verbund gebracht, die ausgestanzte und nach hinten ausgebogene Aufhängezungen 9 aufweist, mit deren Hilfe das Ganze an einer Bauwerkswanderung aufgehängt werden kann. Die Blechplatte 8 ist mit einer unteren Randabwicklung 10 zum Unterfassen der Solarzelle versehen.

## Patentansprüche

1. Verfahren zum Befestigen einer Solarzelle mit vorderer Glasscheibe und hinterer Polyvinylfluoridfolie an einem Untergrund, wobei die Solarzelle mit Hilfe einer Verbundmörtelschicht (5), deren Verbundmörtel aus einem feinteiligen neutralen Zuschlagstoff sowie Zement besteht und mit einer wässrigen Dispersion eines Polyacrylsäurederivates angemacht ist, wobei das Polyacrylsäurederivat ein logarithmisches Dekrement der Torsionsschwingungsdämpfung - bestimmt nach DIN 53445 - aufweist, welches bei Temperaturen unter 0 °C ein Maximum besitzt, mit dem Untergrund in Verbund gebracht wird.

2. Verfahren nach Anspruch 1, **dadurch gekennzeichnet, dass** die Solarzelle auf ihrer Rückseite mit einer weiteren, mit Mangel an Hydrationswasser erhärteten Schicht (4) des Verbundmörtels vorbeschichtet und später mit Hilfe der frischen Verbundmörtelschicht (5) mit dem Untergrund (7 bzw. 8) in Verbund gebracht wird.

3. Verfahren nach Anspruch 1 oder 2, **dadurch gekennzeichnet, dass** die Solarzellen in eine Kassettenausnehmung (6) eines Bauwerksuntergrundes (7) aus Beton eingesetzt und mit dem Bauwerksuntergrund (7) in Verbund gebracht wird.

4. Verfahren nach einem der Ansprüche 1 bis 3, **dadurch gekennzeichnet, dass** die Solarzelle mit Schaumglas als Untergrund in Verbund gebracht wird.

5. Verfahren nach einem der Ansprüche 1 bis 4, **dadurch gekennzeichnet, dass** die Solarzelle mit einer nach hinten ausgebogene Aufhängezungen (9) aufweisenden Blechplatte (8) als Untergrund in Verbund gebracht wird und mit Hilfe der Aufhängezungen (8) an einer Bauwerkswanderung aufgehängt wird.

6. Verfahren nach Anspruch 5, **dadurch gekennzeichnet, dass** die Solarzelle mit einer Blechplatte (8) in Verbund gebracht wird, die mit einer unteren Randabwicklung (10) zum Unterfassen der Solarzelle versehen ist.

## Claims

1. A method for attaching a solar cell with frontal glass pane and rear polyvinyl fluoride film to a surface, wherein the solar cell is brought into bonding contact with the surface using a layer of bonding mortar (5), the mortar of which consists of a finely particulate neutral additive and cement and is tempered with an aqueous dispersion of a polyacrylic acid derivative, wherein the polyacrylic acid derivative has a logarithmic decrement of torsional oscillation damping - determined in accordance with DIN 53445 - that reaches a maximum at temperatures below 0 °C.

2. The method according to claim 1, **characterized in that** the rear side of the solar cell is coated in advance with an additional layer (4) of the bonding mortar that has been hardened by deficiency of hydration water, and is subsequently brought into bonding contact with the surface (7 and/or 8) using the fresh deposit of bonding mortar (5).

3. The method according to claim 1 or 2, **characterized in that** the solar cells are inserted into a coffered recess (6) of a construction surface (7) made from concrete and brought into bonding contact with the construction surface (7).

4. The method according to any of claims 1 to 3, **characterized in that** the solar cell is brought into bonding contact with foam glass as the surface.

5. The method according to any of claims 1 to 4, **characterized in that** the solar cell is brought into bonding contact with a sheet metal plate (8) as the surface that is furnished with rearwardly angled suspension tongues (9), and is suspended from a construction wall using the suspension tongues (9).

6. The method according to claim 5, **characterized in that** the solar cell is brought into bonding contact with a sheet metal plate (8) that is furnished with a lower edge angulation (10) to support the solar cell from below.

## Revendications

1. Procédé de fixation d'une cellule solaire comportant une vitre avant et une feuille de fluorure de polyvinyle arrière sur un support, la cellule solaire étant amenée en liaison avec le support à l'aide d'une couche de mortier composite (5) dont le mortier composite est constitué d'un agrégat neutre à fines particules ainsi que de ciment, et est gâché avec une dispersion aqueuse d'un dérivé de l'acide polyacrylique, le dérivé de l'acide polyacrylique présentant un décrément de l'amortissement des oscillations de torsion - déterminé selon la norme DIN 53445 - qui présente un maximum aux températures inférieures à 0 °C.

2. Procédé selon la revendication 1, **caractérisé en ce que** sur sa face arrière, la cellule solaire est revêtue au préalable d'une autre couche (4) du mortier composite, durcie par manque d'eau d'hydratation, et est amenée plus tard en liaison avec le support (7 respectivement 8) à l'aide de la couche de mortier composite (5) fraîche.

3. Procédé selon la revendication 1 ou 2, **caractérisé en ce que** les cellules solaires sont insérées dans un évidement en caisson (6) d'une fondation d'ouvrage (7) en béton et sont amenées en liaison avec la fondation d'ouvrage (7).

4. Procédé selon l'une des revendications 1 à 3, **caractérisé en ce que** la cellule solaire est amenée en liaison avec du verre mousse servant de support.

5. Procédé selon l'une des revendications 1 à 4, **caractérisé en ce que** la cellule solaire est amenée en liaison avec une plaque de tôle (8) servant de support et présentant des languettes de suspension (9) repliées vers l'arrière, et est suspendue à une paroi d'ouvrage à l'aide des languettes de suspension (9).

6. Procédé selon la revendication 5, **caractérisé en ce que** la cellule solaire est amenée en liaison avec une plaque de tôle (8) qui est pourvue d'un bord déroulé inférieur (10) destiné à passer sous la cellule solaire.
